# EUROPEAN PATENT SPECIFICATION

(11) **EP 3 310 178 B1**
(45) Date of publication and mention of the grant of the patent: **06.03.2024**
(21) Application number: 16745825.6
(22) Date of filing: 21.06.2016
(51) Int. Cl.: A22B 3/08, A22B 3/00

(54) **METHOD AND SYSTEM FOR THE STUNNING AND/OR KILLING OF ANIMALS**
VERFAHREN UND SYSTEM ZUM BETÄUBEN UND/ODER TÖTEN VON TIEREN
PROCÉDÉ ET SYSTÈME POUR ÉTOURDIR ET/OU TUER DES ANIMAUX

(30) Priority: 22.06.2015 IT UB20151581
(43) Date of publication of application: 25.04.2018
(73) Proprietor: Cattaruzzi International S.r.l., 25010 San Zeno Naviglio(Brescia) (IT)
(72) Inventor: CATTARUZZI, Bruno, 25010 San Zeno Naviglio (Brescia) (IT); CHEEK, Hollis, 25010 San Zeno Naviglio (Brescia) (IT)
(74) Representative: Gualeni, Nadia
(86) International application number: PCT/IB2016/053667
(87) International publication number: WO 2016/207780

(56) References cited:
- EP-A2- 1 609 365
- WO-A1-2014/037015
- "COUNCIL REGULATION (EC) No 1099/2009", , 18 November 2009 (2009-11-18), XP055249744, Retrieved from the Internet: URL:http://eur-lex.europa.eu/LexUriServ/Le xUriServ.do?uri=OJ:L:2009:303:0001:0030:EN :PDF [retrieved on 2016-02-12] cited in the application

## Description

The present invention relates to a plant and a method for stunning and/or killing (seen as slaughter or depopulation and other situations) animals in a controlled atmosphere (CAS, Controlled Atmosphere Stunning) suitable for all conditions of use as defined by the regulations on the protection of animals at the time of killing (Regulation (EC) no 1099/2009 of the Council of September 24, 2009) regarding poultry, weasels, badgers and skunks, chinchillas, pigs for slaughter, depopulation and situations other than slaughter. In particular the method of stunning and/or killing according to the present invention involves the use of gas introduced into an airtight chamber in which the pressure has previously been reduced through a partial aspiration of the air inside said chamber.

Stunning methods using gas or stunning methods through exposure to low atmospheric pressure LAPS (low atmospheric pressure stunner) are already known of.

However, such stunning and/or killing have some drawbacks.

As regards stunning and/or killing by gas:
- difficulty of dosing, as required by the current regulations, the proper amount of gas to be introduced into the gas chamber (as defined in the terms of use of the above-mentioned legislation) according to species, category, weight, number of animals present in the chamber and the permanence of the same as the speed of the slaughter line varies; document EP 1 609 365 A2 discloses a device and a method for stunning and/or killing of animals wherein the quantity of gas introduced is preset and controlled by a PLC depending on the weight of the animals in the sealed chamber;
- high gas consumption during slaughter/killing, in that the percentage of gas to be introduced depends on the amount of air present in the chamber (amount which depends on the size of the chamber itself, which is defined depending on the number of animals that pass through said chamber continuously) and guaranteed minimum times for slaughter, as laid down in the aforementioned legislation.

As regards LAPS, described for example in the European patent number EP2055191, this system provides for a significant reduction of the pressure in order to get a low amount of air and consequently a low amount of oxygen likely to stun/kill the animals. This high vacuum is expensive in terms of energy and in order not to cause injury to the animals, must be achieved gradually thereby lengthening the process times for slaughter.

The purpose of the present invention is to provide a method of stunning and/or killing animals and a related plant with the advantageous characteristics of systems using gas or Laps but which is free of or less constrained by the drawbacks mentioned above.

In particular, the purpose of the present invention is to provide a method and a related plant, for stunning and/or killing animals quickly and which allows, according to the user manual supplied by the manufacturer, a perfect and timely control of the quantity of gas to introduce for different types of animals, depending on their weight, number, line speed and residence time in the chamber.

A further aim of the present invention is to provide a method and a system that will greatly reduce the amount of gas used for the same number of animals stunned/killed.

This purpose is achieved by a method for stunning and/or killing animals and a related system that allows precise control of the pressure inside the chamber.

Such purpose is achieved by a method for stunning and/or killing animals according to claim 1 and by a related system according to claim 9.

The dependent claims describe preferred or advantageous embodiments of the method and of the plant.

The characteristics and advantages of the method and of the plant according to the present invention will, in any case, be evident from the description given below of its embodiments, made by way of a non-limiting example with reference to the appended drawings, wherein:
- figure 1 schematically represents a plan view from one side of the plant according to the invention;
- figure 2 shows a plan view from above of the plant in figure 1;
- figure 3 shows a table with further examples of stunning and/or killing cycles according to the present invention.

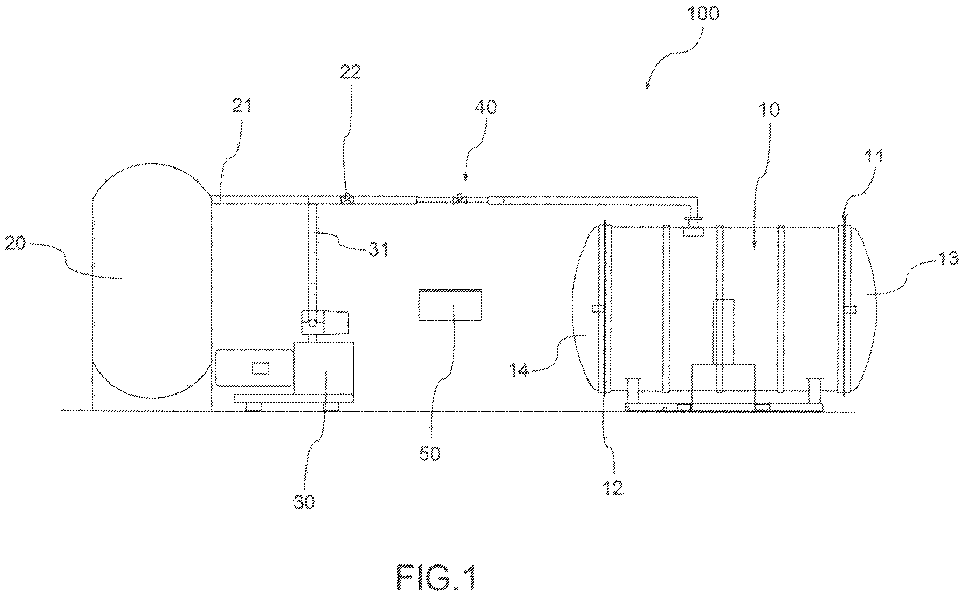

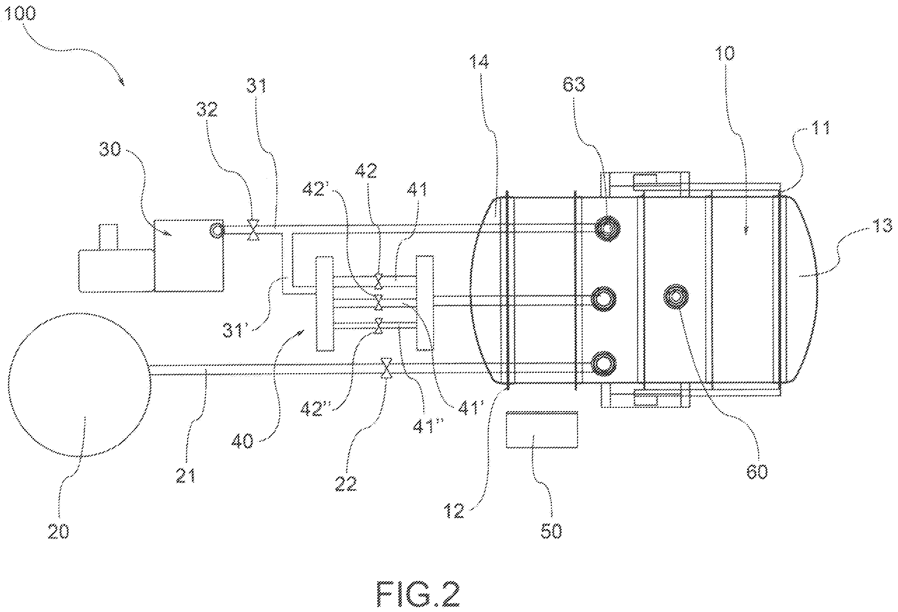

In a general embodiment, as shown in Figures 1 and 2, the plant 100 for stunning and/or killing animals for slaughter according to the present invention comprises an airtight chamber 10 provided with at least one opening 11,12 for the introduction of the live animals and the extraction of the stunned or slaughtered or killed animals, and closing devices suitable to hermetically close said at least one opening 11,12.

Preferably, the chamber 10 has an entrance opening 11 for the introduction of live animals and an exit opening 12 for the extraction of the stunned or killed animals, a respective closing device 13,14 being associated with each opening 11,12.

Animals may be introduced into the system locked up in one large cage or in a succession of smaller cages, or in bulk.

The closing devices 13, 14 associated with the openings 11, 12 are for example of the tilting type, or revolving door type with vertical or horizontal axis. In any case, the closing devices 13, 14 are operable advantageously by means of electric, pneumatic or hydraulic actuators.

The chamber 10 is equipped with a balancing valve 60, to balance the internal pressure of the chamber 10 with the external pressure (atmospheric pressure).

The system 100 comprises suction means 30 communicating with said chamber 10 to remove the air from it. The suction means 30 are suitable to create a depression inside the chamber in such a way as to achieve a lower absolute pressure than the external ambient pressure. Ambient pressure is understood to mean the actual atmospheric pressure outside the chamber, pressure which depends on the altitude of the place where the plant is situated 100.

The suction means 30 comprise for example an electrically-operated pump, connected to the chamber 10 via a duct 31 to which a first check valve 32 is associated for opening and closing said suction pipe 31.

In addition, the pipe 31 is equipped, near the entrance of the chamber 10, with a modulating valve 63.

Preferably, near the airtight chamber 10 a hydraulic system 40 is placed, connected via a bypass duct 31' to the suction means 30.

The hydraulic system 40 comprises at least one pipe 41 fitted with a check valve 42.

In particular, the hydraulic system 40 comprises a plurality of pipes 41, 41',41" of different diameters, wherein each pipe is equipped with a valve 42, 42', 42" of the on-off type.

Advantageously, by acting on the valve 32 and on one of the valves 42, 42', 42" the correct suction time is defined for achieving the depression required inside the chamber 10, depending on the type of animals, their weight, the number thereof and depending on the line speed and residence time in the chamber as provided for in the instruction manual supplied by the manufacturer.

In one embodiment variant, the hydraulic system 40 comprises a pipe 41 fitted with a modulating valve, suitable to also partially close the relative pipe, again depending on the type of animal which the chamber is used for.

The plant comprises means 20 of introducing a gas into the chamber 10 after it has reached a vacuum pressure below atmospheric pressure.

Near the airtight chamber 10, in addition to the suction means 30, a tank 20 is provided containing a gas to be introduced into the airtight chamber 10. A second shut-off valve 22 is connected to the pipe 21 connecting said tank 20 to the chamber 10 for the opening and closing of the pipe 21.

The gas is for example carbon dioxide (CO2), or a mixture containing carbon dioxide associated with inert gases, or a mixture of inert gases such as nitrogen or argon or carbon monoxide (CO).

It is to be noted that the carbon dioxide (CO2) has an anaesthetic effect on the animal. As a result, the step of introducing carbon dioxide into the vacuum chamber contributes, together with the lack of oxygen, to the loss of consciousness or stunning of the animal.

The plant 100 advantageously comprises a control unit 50 designed to control and synchronize the suction means 30, the tank 20 of gas, the closing devices 13,14 of the airtight chamber 10, the hydraulic system 40 and the check valves 22,32. In particular, the control unit 50, after the hermetic closure of the doors of the chamber via a special programme, controls the opening and closing of the check valves 22, 32 and the actuation of the hydraulic system 40, i.e. the opening and closing of each of the check valves 42, 42', 42".

The control unit 50 is provided with a user interface comprising setting means suitable to allow the operator to set the values of absolute pressure (decompression) to be realized in the chamber 10, the percentage of gas to be fed into the chamber 10 after decompression, and to set the values of the total residence time of the animals in the chamber 10.

The control unit 50 comprises a PLC, advantageously a display connected to the PLC, and a recorder which records all the indicative factors such as the values of the pressure and the percentage of gas in the airtight chamber 10 and preferably the percentage of oxygen present in the chamber.

The system 100 comprises a probe that reads the pressure and the pressure variations in the airtight chamber 10, and sends these values to the control unit 50, and preferably to the display connected to the PLC and to the recorder.

Preferably, the plant 100 comprises a pressure switch programmed or programmable on the basis of the environmental pressure. The control unit 50 is thus suitable, taking into account the proper starting value (environmental pressure), to transmit to the suction means the correct pressure difference value (Δ pressure) so as to create the correct depression in the chamber until the desired absolute pressure is achieved. Advantageously, the control unit 50 is provided, in case of breakdown, with an automatic reset system of the plant.

Advantageously, the control unit 50 commands the means 20, 21, 22 for the introduction of the gas on the basis of pressure values detected by the probe. Preferably, the plant 100 comprises a pressure gauge and/or a vacuum gauge, and a transducer, suitable to control the pressure and the pressure variations in the airtight chamber 10.

The control unit 50 thus receives the signal of opening and closing of the valves 22, 32, 42, 42', 42'' from the probe that reads the pressure (or rather the depression) generated in the airtight chamber 10 when the pump 30 is activated and the pressure increase which is generated in the airtight chamber 10 when the introduction of gas from the tank 20 is activated.

The plant 100 comprises detection means of the vital activity of the animals in the chamber 10. For example, the detection means comprise at least one camera, for example infrared, which films the steps of the stunning and/or killing cycle of the animals inside the airtight chamber 10.

The stunning and/or killing cycle of the animals is thus implemented.

In the airtight chamber 10, where the live animals are introduced, a depression is created by the pump 30 connected to the chamber 10 via the pipe 31.

Once the airtight chamber 10 has been placed in a vacuum, the first check valve 32 is closed automatically and simultaneously the second check valve 22 is opened to connect the tank 20 of gas to the chamber 10, gas which expands in said chamber.

After the opening of the closures 13, 14 and the unloading of the stunned or dead animals and replenishing with new live animals, the cycle is repeated.

The method for stunning and/or killing animals, and in particular poultry provides for a step during which, by means of the pump 30 and the actuation of the check valve 32, creates a pressure reduction (or vacuum) in the chamber 10 compared to atmospheric pressure (by convention expressed in millibars and considered equal to 1000 mbar).

The reduction of pressure or vacuum in the airtight chamber 10 is variable from 0 (no reduction of pressure) to 1000 mbar (total vacuum) and, depending on the opening of the hydraulic system 40, that is to say the modulating valve or one of the on-off valves 42, 42', 42", a desired vacuum pressure is achieved (i.e. the reduction of the internal pressure of the airtight chamber 10) in a predetermined period of time.

In the variant in which the pipes 41, 41', 41" of the hydraulic system 40 have different diameters, the reduction of pressure in the airtight chamber 10 is achieved by combining the opening and/or closing of different pipes.

For example, with reference to the variant in Figure 2, (in which the pipe 41 has a larger diameter than the pipe 41', and the pipe 41' has a larger diameter than the pipe 41") it is possible to achieve the pressure of 200 mbar inside the chamber in 60 seconds by opening the check valve 32 and the valve 42 relative to the pipe 41; it is possible to achieve the pressure of 200 mbar inside the chamber in 90 seconds by opening the check valve 32 and the valve 42'relative to the pipe 41', and so on.

The depression in the airtight chamber 10 is obtained by aspirating air, air that contains nitrogen (N2) and oxygen -(02) in the standard percentages below:

### COMPOSITION OF THE ATMOSPHERE (dry air)

Nitrogen 78%
Oxygen: 21%
Argon: 0.8 3%
Carbon dioxide 0.03%

### Other components in smaller quantities

The reduction of pressure thus determines a reduction in the volume of air present in the chamber and therefore a reduction of the amount of oxygen present in the chamber 10. The oxygen remaining, as well as the air, is evenly distributed throughout the volume of the chamber.

It is clear that changing the amount of aspirated air changes the concentration of oxygen and nitrogen present in the chamber accordingly: practically it changes from 21% of 02 and 78% of N2 present in the chamber at atmospheric pressure of 1000 mbar (no vacuum), to around 0% of 02 and around 0% of N2 in the case of absolute vacuum (negative pressure).

The method for stunning and/or killing animals, and in particular poultry, provides, after this step in which a vacuum is created, for a step of introducing a gas in a clearly-defined percentage of the volume of air in the chamber.

In particular, the method provides of selecting the quantity of gas to be fed into the chamber after decompression as a function of the absolute pressure created in the chamber itself. Therefore, the quantity of fed gas is controlled by means of the measuring of the actual pressure inside the chamber 10.

In detail, the step of selecting the quantity of gas involves:
- reading by means of a pressure probe (for example a manometer with data transducer) the actual pressure inside the chamber;
- since pressure and volume are directly proportional, measuring the volume of air remaining in the chamber (10) as corresponding to the pressure actually read by the pressure probe.

In particular, the percentage of gas to be introduced is greater than or equal to 30% of the volume of air remaining in the chamber (10) after the decompression in the case of carbon dioxide (CO2) or of carbon dioxide (CO2) associated with inert gases; equal to or greater than 1% of the volume of air remaining in the chamber (10) after the decompression in the case of carbon monoxide (CO) or a mixture of inert gases such as argon and nitrogen.

Advantageously, the reading of the actual pressure inside the chamber 10 by the probe makes it possible to calculate the correct percentage of gas to be introduced, aspirated from the tank 20 by means of the valve 22. In fact, the pressure and volume of the chamber being directly proportional, the reading of the actual pressure inside the chamber indicates the actual air volume remaining following the depression: for example, if the pressure inside the chamber is reduced to 1/5, the volume of air present in the chamber is also reduced by 1/5, so the right amount of gas to be introduced will be equal to 40% of the air remaining (1/5 of the volume of air present in the chamber before decompression).

After closing the check valve 22 for the introduction of the gas, the animals remain in this condition until reaching a state of unconsciousness and/or death by "anoxia".

Thanks to the introduction of gas in the chamber 10 a mixture is obtained composed of rarefied air (due to the previous depression) and gas which is even poorer in oxygen.

Particularly in the case of birds, bird lungs being essentially of fixed volume, the volume of air aspirated by the lungs during each respiration cycle is almost constant. Therefore, during each breathing cycle birds always inspire the same volume, but instead of air containing (in normal atmospheric conditions) 21% oxygen, they breathe a mixture composed of rarefied air and gas, thus containing a small concentration of oxygen and a certain amount of gas which in the case of CO2 will have an anaesthetic effect on the brain of the animals.

It has then been demonstrated that the presence of carbon dioxide in the air further reduces the amount of oxygen which is already reduced by effect of the vacuum, causing the death of the animals by "anoxia" and, for the same percentage of 02 in the chamber, more rapidly and with considerable savings of gas compared to the case in which carbon dioxide or other gases are introduced in chambers or atmospheric pressure holes.

In particular, it has been seen that the time of each stunning and/or killing cycle depends on:
- the value of absolute pressure achieved in the airtight chamber (between 0 mbar and 1000 mbar);
- the time taken to reach such internal pressure value by the chamber (between 30 seconds to 600 seconds);
- the amount of carbon dioxide or other gases introduced (which, for example in the case of introducing a volume of gas equal to 40% of the volume of air present in a chamber having a volume of 1 m³, varies from 80 1 for a pressure of the chamber of 200 mbar (absolute) to 200 l for a pressure of the chamber of 500 mbar).

Preferably, the gas is introduced gradually in the chamber 10 immediately after the animals have reached the desired depression. The pressure gauge and the transducer of the pressure values inside the chamber 10 make it possible to precisely identify the desired depression, the consequent closure of the aspiration valve 32 and the simultaneous opening of the inlet valve 22 of the gas, which is closed upon reaching the exact quantity of introduced gas, determined depending on the new pressure reached.

The method for stunning and/or killing animals, particularly poultry, weasels, skunks and badgers, chinchillas, pigs for slaughter or depopulation and situations other than slaughter provides, depending on the conditions of use set out (as per the rules on the protection of animals at slaughter - Regulation (EC) No. 1099/2009 of the Council of 24 September 2009) for one or two steps of introducing gas into the chamber 10 to cause the death of animals by anoxia (reduction or lack of oxygen).

In particular, the percentage of gas to introduce is greater than or equal to 20% of the volume of air remaining in the chamber (10) after decompression in the case of carbon dioxide (CO2).

For example, the method involves, after a first introduction of 40% of CO2 gas, a further step of introducing CO 2 suitable for causing the slaughter of animals, said gas in a percentage equal to 20% of the volume of air, remaining in the chamber 10 after decompression.

As said, the control of the percentage of gas to be introduced can easily be managed by controlling the pressure inside the airtight chamber 10.

Advantageously, the precise control of the quantity of gas to introduce is, in addition, achieved at full operating regime of the slaughter plants through the use of one or more intermediate tanks, connected by pipes to the hydraulic system 40, containing gas or gas mixtures. The intermediate tanks, at ambient pressure of 1 atm, have the required capacity to introduce into the airtight chamber 10 the proper percentage of gas.

The method for stunning and/or killing animals according to the present invention thus comprises the step of selecting the absolute pressure in the chamber 10 to be achieved and the percentage of gas to be introduced into the chamber 10 after decompression. Furthermore, the method comprises the step of selecting the total time of residence of the animals in the chamber 10.

Preferably, the method for stunning and/or killing animals according to the present invention (namely with gas after depression of the chamber) does not provide for falling below 200 mbar of absolute pressure inside the chamber 10, and does not provide for reaching this value in less than 30 seconds, as this may cause internal injury to the animals, causing suffering.

Preferably, the method for stunning and/or killing animals according to the present invention does not provide for rising above 845 mbar absolute pressure inside the chamber 10.

Preferably, in the method for stunning and/or killing animals according to the present invention, the overall time of residence of the animals in the chamber 10 is between 80 seconds and 600 seconds.

### EXAMPLES OF STUNNING AND/OR KILLING CYCLES

By convention the following values are assumed.

### Pressure:

1 Atm = 1013 mbar above sea level = by convention 1000 mbar during the test.

### Volume of the airtight chamber 10:

1 m ³ = 1000 litres (1 litre being understood as a unit of volume).
Percentage in the air at atmospheric pressure of: oxygen (02) = 21%
nitrogen (N2) = 78%

### EXAMPLE 1

A chicken of average weight 1.8 kg was put in the chamber 10; a depression was created in the chamber up to the internal pressure of about 300 mbar (decompression pressure or absolute pressure) in about 46 seconds, opening the check valve 32 and the valve 42 of the pipe 41 of the hydraulic circuit 40.

This value of absolute pressure (300 mbar) corresponds to a volume of air of 300 1 uniformly distributed inside the chamber and in which there is thus a quantity of nitrogen (N2) equal to 78%, corresponding to 234 1, and an amount of oxygen (02) equal to 21%, corresponding to about 63 1. Therefore, the concentration of evenly distributed oxygen in the chamber (in depression 300 mbar) is equal to 6.3% of the volume of the chamber (1000 litres).

CO2 gas was then introduced up to 40% of the volume in the chamber (300 1), corresponding to 120 1 of gas; such volume (120 1) of gas added to the volume of residual air (300 1) gives a total volume of the mixture (air + gas) equal to 420 1, which corresponds to an absolute pressure of 420 mbar.

At this point of the killing process, a pressure condition is created in the chamber 10 (420mbar) greater than the initial pressure (300 mbar) and thus creates a condition of improved well-being for the animals.

The concentration of oxygen evenly distributed in the chamber (in depression) after the introduction of gas fell to 4.5% of the volume of the chamber itself deriving from the proportion "volume of air remaining (300 l)/"volume mixture" (420 1) x 6.3% oxygen = 4.5%.

The animals inside the airtight chamber 10 having reached the state of unconsciousness, an additional amount of CO2 gas equal to 20% of the volume of air in the chamber after the reduction of pressure (300 l), corresponding therefore to 60 l of gas was introduced; this volume (60 l) of gas added to the volume of the previous mixture (420 l) corresponds to a total volume of the mixture (air + gas) amounting to 480 l, corresponding to an absolute pressure of 480 mbar, thereby creating a further condition of well-being for the animals.

With the addition of just 180 l of gas (120 + 60) the concentration of oxygen (02) in the chamber 10 fell from the initial 6.3% by effect of the depression alone to 4.5% with a first introduction of gas (40% of CO2), to 3.96% following the introduction of further gas (20% of CO2).

It is to be noted that this value (3.96% of 02 in the chamber 10) is similar to what you would get in a gas stunning and/or killing system after introducing gas, in a chamber at atmospheric pressure, in the measure of about 81% of the volume of air in the chamber, that is to say 810 l of gas in the case of a chamber of 1000 litres of volume. In fact after such introduction a mixture (air and gas) would form in which the air is 19%, air which contains 21% oxygen (therefore 39.9 l of 02) which expanding throughout the volume of the chamber corresponds to a concentration equal to 3.99%. As a result, with the method according to the present invention, with only 180 1 of gas (120 + 60), the same killing result is achieved as would be achieved with 810 1 of gas without any depression.

It is also to be noted that this value (3.96% of 02 in the chamber 10) is similar to what would be achieved in a LAPS stunning and/or killing system after a depression in the chamber 10 up to the internal pressure of about 189 mbar. In fact after such depression a volume of air equal to 189 l would remain in the chamber, of which 39.69 l of 02, which expanding throughout the volume of the chamber corresponds to a concentration equal to 3.96%. Consequently, with the method according to the present invention, by creating a depression up to the absolute pressure of 300 mbar, the same killing result is achieved as with a depression up to 189 mbar with no gas input. It follows that the method according to the present invention enables energy savings and greater animal well-being, subject to a minor depression.

Returning to the example, the depression was maintained until the end of the cycle of 3 minutes and 30 seconds.

The bird was found dead after 3 minutes from the start of the cycle but it was preferred to keep it for a further 30 seconds inside the chamber 10 after dying, before opening the balancing valve 60 of the chamber 10.

### EXAMPLE 2

A chicken of average weight 1.8 kg was put in the chamber 10; a vacuum was created in the chamber up to the internal pressure of about 234 mbar (decompression pressure or absolute pressure) in about 60 seconds, opening the check valve 32 and the valve 42 of the pipe 41 of the hydraulic circuit 40.

Such absolute pressure value (234 MB) corresponds to a volume of 234 1 of air evenly distributed inside the chamber and in which there is a quantity of nitrogen (N2) equal to 78%, corresponding to approximately 184 1, and a quantity of oxygen (02) equal to 21%, corresponding to about 49.2 1. Therefore, the concentration of evenly distributed oxygen in the chamber (in depression 300 mbar) is equal to 4.91% of the volume of the chamber (1000 litres).

Gas was then introduced up to 40% of the volume of air in the chamber (234 1), corresponding to about 93 1 gas; this volume (93 1) of gas plus the residual air volume (234 1) gives a total volume of the mixture (air + gas) of about 327 1, corresponding to an absolute pressure of 327 mbar.

At this point in the stunning and/or killing process, a pressure condition (327 mbar) greater than the initial pressure (234 MB) is created in the chamber 10, thus creating a condition of greater animal well-being.

The concentration of oxygen evenly distributed in the chamber (in depression) after the introduction of gas is equal to 3.51% of the volume of the chamber itself deriving from the "volume proportion of remaining air" (234 l)/"mixture volume"(327 l) × 4.91% oxygen = 3.51%.

Having reached a state of unconsciousness of the animals inside the airtight chamber 10, a further amount of gas equal to 20% of the volume of air in the chamber (234 l), corresponding to about 47 l of gas was introduced; this volume (47 l) of gas added to the volume of the previous mixture (327 l) corresponds to a total volume of the mixture (air + gas) of 374 l, corresponding to an absolute pressure of 374 mbar.

Also in this case, a condition of pressure (374 mbar) is created in the chamber 10 greater than the initial pressure and thus a better condition of well-being for the animals is created.

With the addition of just 140 l of gas (93 + 47) the concentration of oxygen (02) in the chamber 10 fell from the initial 4.91% by depression alone, to 3.51% with a first introduction of gas (40% CO2), and to 3.07% following the introduction of additional gas (20% of CO2).

The depression was maintained until the end of the cycle of 2 minutes and 30 seconds.

The bird was found dead after 2 minutes and 10 seconds from the start of the cycle but it was preferred to keep it for a further 20 seconds inside the chamber 10 after dying, before opening the balancing valve 60 of the chamber 10.

From the examples above it is clear that the greater the depression created in the airtight chamber 10, the greater the rarefaction of the air (and therefore greater reduction of oxygen) and the greater the stunning and/or killing effect of the gas introduced, which further lowers the concentration of oxygen with consequent reduction in the slaughtering time of the animals in the chamber.

With the plant 100 and relative method for stunning and/or killing animals it is possible to reduce cycle times (from 3 min and 30s in Example 1, to 2min 30s in Example 2) thereby increasing the stunning and/or killing cycles/hour resulting in lower plant costs 100.

In addition, it is possible to reduce the volume of gas used (180 l of CO2 in example 1, 141 l of CO2 in example 2) and thus the cost of the carbon dioxide used.

### EXAMPLE 3

A chicken of average weight 1.8 kg was put in the chamber 10; a vacuum was created in the chamber up to the internal pressure of about 335.7 mbar (decompression pressure or absolute pressure) in about 66 seconds.

Such absolute pressure value (335.7 Mbar) corresponds to a volume of air of 335.7 l evenly distributed inside the chamber and in which a quantity of nitrogen (N2) equal to 78%, corresponding to approximately 262 l, and a quantity of oxygen (02) equal to 21%, corresponding to about 70 l are present. Therefore, the concentration of evenly distributed oxygen in the chamber (in depression 335.7 mbar) is equal to 7% of the volume of the chamber (1000 litres).

Gas was then introduced up to 40% of the volume of air in the chamber (335.7 l), corresponding to about 135 l gas; this volume (135 l) of gas plus the residual air volume (335.7 l) gives a total volume of the mixture (air + gas) of about 470 l, corresponding to an absolute pressure of 470 mbar.

At this point in the stunning and/or killing process, a pressure condition (470 mbar) greater than the initial pressure (335.7 mbar) is created in the chamber 10, thus creating a condition of greater animal well-being.

The concentration of oxygen evenly distributed in the chamber (in depression) after the introduction of gas is equal to 3.51% of the volume of the chamber itself deriving from the "volume proportion of remaining air" (335.7 l)/"mixture volume"(470 l) × 7% oxygen = 5%.

With the addition of just 135 l of gas the concentration of oxygen (02) in the chamber 10 fell from the initial 7% by depression alone, to 5% following the introduction of gas (40% CO2).

The depression was maintained until the end of the cycle of 3 minutes and 30 seconds.

The bird was found dead after 3 minutes from the start of the cycle but it was preferred to keep it for a further 30 seconds inside the chamber 10 after dying, before opening the balancing valve 60 of the chamber 10.

The low oxygen and low depression reached are ideal for the well-being of the animals which reach the state of "anoxia" faster and without trauma.

### FURTHER EXAMPLES OF THE KILLING CYCLE

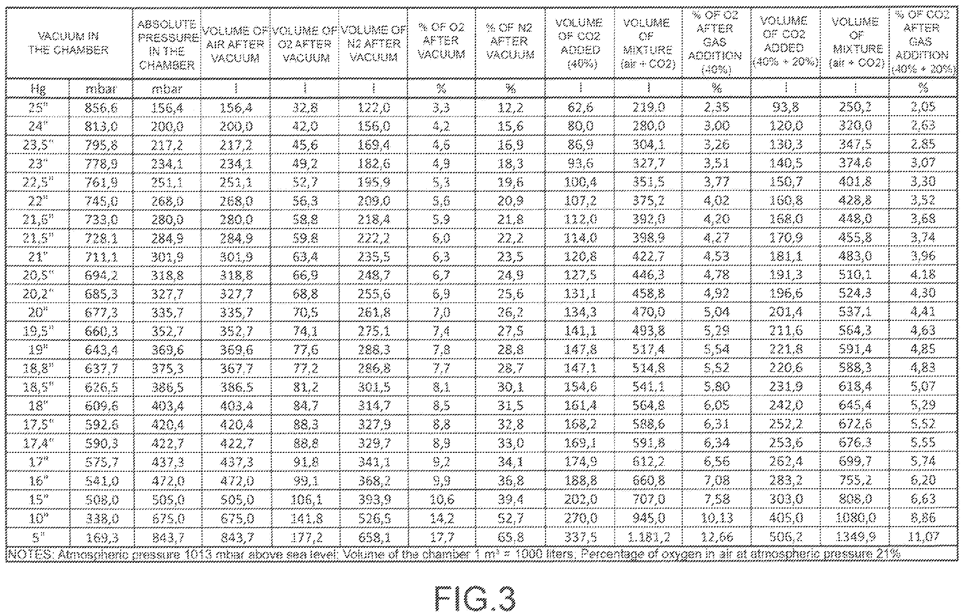

Further examples are summarized in the table shown in Figure 3, relevant to an atmospheric pressure of 1013 mbar above sea level.

The method for stunning and/or killing animals according to the present invention, is based on the control of the volume of gas to introduce and consequently on the control of the percentage of oxygen in the chamber by control of the pressure inside an airtight chamber in which firstly a depression is created until it reaches a certain internal pressure and subsequently the pressure inside the chamber is raised by introducing gas, such as carbon dioxide or other inert gases. Thanks to the direct ratio between the pressure increase and the increase of volume of air inside the airtight chamber the correct percentage of gas to introduce into the airtight chamber can be achieved with considerable accuracy so as to create the right percentage concentration of oxygen in the mixture (rarefied air and gas) which causes the death of the animals by anoxia in a given time.

Lastly, it is to be noted that the system proposed here can be used in all animals and cases provided for by the legislation referred to above.

The method for controlling the exact amount of gas to be fed into the chamber, according to this invention, provides for the control of the quantity pf gas based on control of the pressure, since pressure and volume are directly proportional. Therefore, the reading and control of the pressure are absolutely precise thanks to the use of a single instrument for the whole chamber (i.e., using the manometer data transducer). In addition, advantageously, the pressure is also homogeneous throughout the chamber and, consequently, also the percentage of gas and the percentage of oxygen are homogeneous throughout the chamber.

This simplicity of managing the volume of gas to be fed into the chamber allows:
- strictly complying with current law;
- quickly adapting (by programming a different pressure value via PLC) the system to the weight of the animals to be stunned/killed;
- quickly adapting the system to the speed of the slaughter line of animals to be stunned/killed;
- ensuring that all animals placed in the chamber receive the same treatment as defined by the guidelines of the legislature for animal welfare.

Innovatively, the method and relative plant for stunning and/or killing animals in a controlled atmosphere according to the present invention, makes it possible to reduce stunning and/or killing times of the animal while respecting all legal criteria required for animal well-being.

Advantageously, the method and plant for stunning and/or killing animals according to the present invention, makes it possible to precisely control the percentage of air to be extracted, the percentage of residual oxygen in the airtight chamber, and the percentage of gas (carbon dioxide or other inert gases) to introduce.

Advantageously, the method and plant for stunning and/or killing animals according to the present invention, makes it possible to control the stunning and/or killing times of birds in that by acting with precision on the oxygen value present after introducing the gas, the stunning and/or killing plant can be customised in relation to the size of chickens. For example, with small chickens (of about 1.8 kg live) a 200 mbar depression may be reached quickly, up to a total residence time in the chamber of about 2 minutes. For example, with larger chickens (of approx. 3.6 kg live) it is appropriate to reach a 200 mbar depression and all the intermediate steps in longer times.

Advantageously, the method and plant for stunning and/or killing animals according to the present invention, reduces the costs associated with the use of carbon dioxide or other inert gases and reduces the emissions of CO2 into the atmosphere, compared to a gas stunning system.

Advantageously, the method and plant for stunning and/or killing animals according to the present invention, reduces the energy consumption related to the depression, since the working pressure inside the chamber is higher than that used in traditional LAPS systems, resulting in greater well-being for the animals, and in the case of smaller birds reduced breaking of the wings.

Advantageously, the method and plant according to the present invention, permits programming of the stunning and/or killing cycle controlling the depression created in the chamber (absolute pressure), the quantity of gas to be introduced and the residence times of the animals in the chamber. It is thus possible to manage the killing cycle balancing the needs of animal well-being with cost containment requirements. Consequently, depending on the type of animal and as provided for by applicable law, it is possible to reduce the amount of gas introduced and the stunning and/or killing cycle times by creating a greater depression and greater vacuum inside the chamber, with benefits from the strictly economic point of view or alternatively, it is possible, by increasing the quantity of gas introduced and the stunning and/or killing cycle times, to maintain a lesser depression and a higher absolute pressure inside the chamber, with further advantages from the point of view of animal well-being.

Obviously, a person skilled in the art may make further modifications and variations to the plant and to the method according to the present invention so as to satisfy contingent and specific requirements while remaining within the sphere of protection of the invention as defined by the following claims.

## Claims

1. Method of stunning and/or killing, that is slaughter or depopulation and other situations, of animals such as poultry, pigs, chinchillas, mustelids, rabbits and animals used for fur, in a controlled atmosphere, comprising the steps of:
- bringing the animals into an airtight chamber (10) and closing the chamber (10);
- creating a vacuum inside the chamber (10) in such a way as to reach an absolute pressure lower than an ambient pressure external to said chamber (10);
- after the absolute pressure has been reached, adding into the chamber (10) at least one gas apt to cause stunning and/or killing of the animals, said gas in such a quantity as to reach a preset percentage of the volume of air remaining in the chamber (10) after decompression; comprising the step of selecting the quantity of gas to be fed into the chamber (10) after decompression as a function of the absolute pressure created in the chamber (10), wherein the quantity of fed gas is controlled by means of the measuring of the actual pressure inside the chamber (10).

2. Method according to claim 1, wherein the step of selecting the quantity of gas involves:
- reading by means of a pressure probe the actual pressure inside the chamber;
- since pressure and volume are directly proportional, measuring the volume of air remaining in the chamber (10) as corresponding to the pressure actually read by the pressure probe.

3. Method according to any one of the preceding claims, wherein the absolute pressure is higher than 200 mbar and lower than 845 mbar.

4. Method according to any one of the preceding claims, comprising a further step of introducing at least one gas apt to cause the killing of the animals, said gas in such a quantity as to reach a preset percentage of the volume of air remaining in the chamber (10) after decompression.

5. Method according to claim 4, wherein the percentage of gas to be fed is equal to or higher than 20% of the volume of air remaining in the chamber (10) after decompression in the case of carbon dioxide (CO2).

6. Method according to any one of the preceding claims, comprising the step of selecting the total time the animals stay in the chamber (10), and wherein the total time the animals stay in the chamber (10) is comprised between 80 seconds and 600 seconds.

7. Method according to any one of the preceding claims, wherein the gas introduced is carbon monoxide (CO), or carbon dioxide (CO2), or a mixture containing carbon dioxide (CO2) associated with inert gases, or a mixture of inert gases such as nitrogen or argon.

8. Method according to any one of the preceding claims, wherein the percentage of gas to be fed is equal to or higher than 30% of the volume of air remaining in the chamber (10) after decompression in the case of carbon dioxide (CO2) or of carbon dioxide (CO2) associated with inert gases; equal to or higher than 1% of the volume of air remaining in the chamber (10) after decompression in the case of carbon monoxide (CO) or of a mixture of inert gases such as argon and nitrogen.

9. System (100) for the stunning and/or killing of live animals in controlled atmosphere, comprising an airtight chamber (10) provided with at least one opening (11,12) for the introduction of the live animals and the extraction of the stunned or killed animals, closure devices (13,14) apt to close hermetically said at least one opening (11,12), aspiration means (30,31,32) communicating with said chamber (10) to remove air therefrom, means (20,21,22) for the feeding of at least one gas apt to cause the stunning and/or killing of the animals in the chamber (10) after a preset absolute pressure has been reached therein, a control unit (50) apt to control the aspiration means (30,31,32) and the means (20,21,22) for the feeding of the gas according to the method of stunning and/or killing according to one of the preceding claims,
comprising a pressure probe apt to detect the actual pressure inside the chamber (10), and wherein the control unit (50) controls the means (20,21,22) for the feeding of the gas on the basis of the pressure values detected by the probe.

10. System (100) according to claim 9, wherein the control unit (50) is provided with a user interface comprising means of setting/resetting apt to allow the operator to set the values of absolute pressure to be created in the chamber (10) and the percentage of gas to be fed into the chamber (10) after decompression.

11. System (100) according to claim 10, wherein said setting means are apt to allow the operator to set the values of the total time the animals stay in the chamber (10) .

12. System (100) according to one of claims 9 to 11, wherein the aspiration means comprise a pump (30) connected to the chamber (10) via at least one conduit (31) whereto a first shut-off valve (32) is associated for the opening and the closure of the conduit (31), and the means for the feeding of at least one gas comprise at least one tank (20) containing the gas to be fed connected to the chamber (10) by means of at least one conduit (21) whereto a second shut-off valve (22) is associated for the opening and the closure of the conduit (21).

13. System (100) according to one of claims 9 to 12, comprising a hydraulic system (40), connected via a bypass conduit (31') to the aspiration means (30), comprising a plurality of pipes (41,41',41") of different diameter, wherein each pipe is provided with a valve (42,42',42") of the on-off type.

## Patentansprüche

1. Verfahren zum Betäuben und/oder Töten, also zum Schlachten oder Keulen und anderen Situationen, von Tieren wie Geflügel, Schweinen, Chinchillas, Mardern, Kaninchen und Tieren, die als Pelztiere verwendet werden, in kontrollierter Atmosphäre, umfassend die folgenden Schritte:
- Verbringen der Tiere in eine luftdichte Kammer (10) und Verschließen der Kammer (10);
- Erzeugen eines Vakuums innerhalb der Kammer (10), um einen absoluten Druck zu erreichen, der niedriger ist als ein Umgebungsdruck außerhalb der Kammer (10);
- nach Erreichen des absoluten Drucks Zusetzen von zumindest einem Gas, das geeignet ist, die Tiere zu betäuben und/oder zu töten, in die Kammer (10), wobei das in einer solchen Menge vorliegt, dass ein voreingestellter Prozentsatz des nach der Dekompression in der Kammer (10) verbleibenden Luftvolumens erreicht wird; umfassend den Schritt des Auswählens der Menge des nach der Dekompression in die Kammer (10) zuzuführenden Gases abhängig von dem in der Kammer (10) erzeugten absoluten Druck, wobei die Menge zugeführten Gases mittels des Messens des tatsächlichen Drucks im Innern der Kammer gesteuert wird.

2. Verfahren nach Anspruch 1, wobei der Schritt des Auswählens der Gasmenge umfasst:
- Lesen des tatsächlichen Drucks im Innern der Kammer mittels einer Drucksonde;
- da Druck und Volumen unmittelbar proportional sind, Messen des Volumens von in der Kammer (10) verbleibenden Luft entsprechend dem tatsächlich von der Drucksonde gelesenen Druck.

3. Verfahren nach einem der vorstehenden Ansprüche, wobei der absolute Druck höher als 200 mbar und niedriger als 845 mbar ist.

4. Verfahren nach einem der vorstehenden Ansprüche, umfassend einen weiteren Schritt des Einleitens zumindest eines Gases, das geeignet ist, die Tötung der Tiere zu bewirken, wobei das Gas in einer solchen Menge vorliegt, dass nach der Dekompression ein voreingestellter Prozentsatz des in der Kammer (10) verbleibenden Luftvolumens erreicht wird.

5. Verfahren nach Anspruch 4, wobei der Prozentsatz des zuzuführenden Gases im Fall von Kohlendioxid (CO₂) größer gleich 20 % des nach der Dekompression in der Kammer (10) verbleibenden Luftvolumens ist.

6. Verfahren nach einem der vorstehenden Ansprüche, umfassend den Schritt des Auswählens der Gesamtzeit, für die die Tiere in der Kammer (10) bleiben, und wobei die Gesamtzeit, für die die Tiere in der Kammer (10) bleiben, zwischen 80 Sekunden und 600 Sekunden liegt.

7. Verfahren nach einem der vorstehenden Ansprüche, wobei das eingeleitete Gas Kohlenmonoxid (CO) oder Kohlendioxid (CO₂) oder ein Gemisch ist, das Kohlendioxid (CO₂) in Verbindung mit Inertgasen enthält, oder ein Gemisch aus Inertgasen wie Stickstoff oder Argon.

8. Verfahren nach einem der vorstehenden Ansprüche, wobei im Fall von Kohlendioxid (CO2) oder von Kohlendioxid (CO2) zusammen mit Inertgas der Prozentsatz des zuzuführenden Gases größer oder gleich 30 % des Luftvolumens ist, das nach der Dekompression in der Kammer (10) verbleibt; im Fall von Kohlenmonoxid (CO) oder eines Gemischs aus Inertgasen wie Argon und Stickstoff größer oder gleich 1 % des Luftvolumens ist, das nach der Dekompression in der Kammer (10) verbleibt.

9. System (100) zum Betäuben und/oder Töten von lebenden Tieren in kontrollierter Atmosphäre, aufweisend eine luftdichte Kammer (10), die versehen ist mit zumindest einer Öffnung (11, 12) zum Einbringen der lebenden Tiere und zum Entnehmen der betäubten oder getöteten Tiere, Verschlussvorrichtungen (13, 14), die geeignet sind, die zumindest eine Öffnung (11, 12) hermetisch zu verschließen, Absaugeinrichtungen (30, 31, 32), die mit der Kammer (10) in Verbindung stehen, um Luft aus dieser zu entfernen, Einrichtungen (20, 21, 22) für die Zufuhr von zumindest einem Gas, das geeignet ist, das Betäuben und/oder Töten der Tiere in der Kammer (10) zu bewirken, nachdem in dieser ein voreingestellter absoluter Druck erreicht wurde, eine Steuerungseinheit (50), die geeignet ist, die Absaugeinrichtungen (30, 31, 32) zu steuern und Einrichtungen (20, 21, 22) zum Zuführen des Gases gemäß des Verfahrens zum Betäuben oder Töten nach einem der vorstehenden Ansprüche, aufweisend eine Drucksonde, die geeignet ist, den tatsächlichen Druck im Innern der Kammer (10) zu detektieren, und wobei die Steuerungseinheit (50) die Einrichtungen (20, 21, 22) zum Zuführen des Gases basierend auf den von der Sonde detektierten Druckwerten steuert.

10. System (100) nach Anspruch 9, wobei die Steuerungseinheit (50) mit einer Benutzerschnittstelle versehen ist, die Einrichtungen zum Festlegen/Zurücksetzen umfasst, die es dem Bediener ermöglichen, die Werte des in der Kammer (10) zu erzeugenden Absolutdrucks und den Prozentsatz des nach der Dekompression in die Kammer (10) einzuspeisenden Gases festzulegen.

11. System (100) nach Anspruch 10, wobei die Festlegungseinrichtungen geeignet sind, es dem Bediener zu ermöglichen, die Werte der Gesamtzeit einzustellen, für die die Tiere in der Kammer (10) bleiben.

12. System (100) nach einem der Ansprüche 9 bis 11, wobei die Ansaugeinrichtungen eine Pumpe (30) umfassen, die über zumindest eine Leitung (31) mit der Kammer (10) verbunden ist, der ein erstes Absperrventil (32) zum Öffnen und Verschließen der Leitung (31) zugeordnet ist und die Einrichtungen zum Zuführen von zumindest einem Gas zumindest einen Tank (20) aufweisen, der das zuzuführende Gas enthält und mittels zumindest einer Leitung (21), der ein zweites Absperrventil (22) zum Öffnen und Schließen der Leitung (21) zugeordnet ist, mit der Kammer (10) verbunden ist.

13. System (100) nach einem der Ansprüche 9 bis 12, aufweisend ein Hydrauliksystem (40), das über eine Bypassleitung (31') mit der Absaugeinrichtung (30) verbunden ist, aufweisend eine Vielzahl von Rohren (41, 41', 41") unterschiedlichen Durchmessers, wobei jedes Rohr mit einem Ventil (42, 42', 42") vom An/Aus-Typ versehen ist.

## Revendications

1. Procédé d'étourdissement et/ou de mise à mort, à savoir d'abattage ou de dépeuplement et d'autres situations, d'animaux tels que des volailles, des cochons, des chinchillas, des mustélidés, des lapins et des animaux utilisés pour leur fourrure, dans une atmosphère contrôlée, comprenant les étapes de :
- placement des animaux dans une chambre étanche à l'air (10) et fermeture de la chambre (10) ;
- création d'un vide à l'intérieur de la chambre (10) de manière à atteindre une pression absolue inférieure à une pression ambiante externe à ladite chambre (10) ;
- après que la pression absolue a été atteinte, ajout dans la chambre (10) d'au moins un gaz apte à provoquer l'étourdissement et/ou la mise à mort des animaux, ledit gaz étant présent en une quantité permettant d'atteindre un pourcentage prédéfini du volume d'air restant dans la chambre (10) après décompression ; comprenant l'étape de sélection de la quantité de gaz devant être introduite dans la chambre (10) après décompression en fonction de la pression absolue créée dans la chambre (10), où la quantité de gaz introduite est contrôlée au moyen de la mesure de la pression réelle à l'intérieur de la chambre (10).

2. Procédé selon la revendication 1, dans lequel l'étape de sélection de la quantité de gaz implique :
- la lecture au moyen d'une sonde de pression de la pression réelle à l'intérieur de la chambre ;
- puisque la pression et le volume sont directement proportionnels, la mesure du volume d'air restant dans la chambre (10), comme correspondant à la pression réellement lue par la sonde de pression.

3. Procédé selon l'une quelconque des revendications précédentes, dans lequel la pression absolue est supérieure à 200 mbar et inférieure à 845 mbar.

4. Procédé selon l'une quelconque des revendications précédentes, comprenant une étape supplémentaire d'introduction d'au moins un gaz apte à provoquer la mise à mort des animaux, ledit gaz étant présent en une quantité permettant d'atteindre un pourcentage prédéfini du volume d'air restant dans la chambre (10) après décompression.

5. Procédé selon la revendication 4, dans lequel le pourcentage de gaz devant être introduit est égal ou supérieur à 20 % du volume d'air restant dans la chambre (10) après décompression dans le cas du dioxyde de carbone (CO2).

6. Procédé selon l'une quelconque des revendications précédentes, comprenant l'étape de sélection du temps total de séjour des animaux dans la chambre (10), et dans lequel le temps total de séjour des animaux dans la chambre (10) est compris entre 80 secondes et 600 secondes.

7. Procédé selon l'une quelconque des revendications précédentes, dans lequel le gaz introduit est du monoxyde de carbone (CO), ou du dioxyde de carbone (CO2), ou un mélange contenant du dioxyde de carbone (CO2) associé à des gaz inertes, ou un mélange de gaz inertes tels que l'azote ou l'argon.

8. Procédé selon l'une quelconque des revendications précédentes, dans lequel le pourcentage de gaz devant être introduit est égal ou supérieur à 30 % du volume d'air restant dans la chambre (10) après décompression dans le cas du dioxyde de carbone (CO2) ou du dioxyde de carbone (CO2) associé à des gaz inertes ; égal ou supérieur à 1 % du volume d'air restant dans la chambre (10) après décompression dans le cas du monoxyde de carbone (CO) ou d'un mélange de gaz inertes tels que l'argon et l'azote.

9. Système (100) d'étourdissement et/ou de mise à mort d'animaux vivants dans une atmosphère contrôlée, comprenant une chambre étanche à l'air (10) dotée d'au moins une ouverture (11, 12) destinée à l'introduction des animaux vivants et à l'extraction des animaux étourdis ou morts, de dispositifs de fermeture (13, 14) aptes à fermer hermétiquement ladite ouverture (11, 12), au moins au nombre de une, de moyens d'aspiration (30, 31, 32) communiquant avec ladite chambre (10) pour retirer l'air de celle-ci, de moyens (20, 21, 22) destinés à l'introduction d'au moins un gaz apte à provoquer l'étourdissement et/ou la mise à mort des animaux dans la chambre (10) après qu'une pression absolue prédéfinie a été atteinte à l'intérieur, d'une unité de commande (50) apte à commander les moyens d'aspiration (30, 31, 32) et les moyens (20, 21, 22) destinés à l'introduction du gaz selon le procédé d'étourdissement et/ou de mise à mort selon l'une des revendications précédentes,
comprenant une sonde de pression apte à détecter la pression réelle à l'intérieur de la chambre (10), et dans lequel l'unité de commande (50) commande les moyens (20, 21, 22) destinés à l'introduction du gaz sur la base des valeurs de pression détectées par la sonde.

10. Système (100) selon la revendication 9, dans lequel l'unité de commande (50) est dotée d'une interface utilisateur comprenant des moyens de configuration/réinitialisation aptes à permettre à l'opérateur de définir les valeurs de pression absolue devant être générées dans la chambre (10) et le pourcentage de gaz devant être introduit dans la chambre (10) après décompression.

11. Système (100) selon la revendication 10, dans lequel lesdits moyens de configuration sont aptes à permettre à l'opérateur de définir les valeurs du temps total de séjour des animaux dans la chambre (10).

12. Système (100) selon l'une des revendications 9 à 11, dans lequel les moyens d'aspiration comprennent une pompe (30) raccordée à la chambre (10) via au moins une conduite (31) à laquelle une première soupape d'arrêt (32) est associée pour l'ouverture et la fermeture de la conduite (31), et les moyens destinés à l'introduction d'au moins un gaz comprennent au moins un réservoir (20) contenant le gaz devant être introduit raccordé à la chambre (10) au moyen d'au moins une conduite (21) à laquelle une seconde soupape d'arrêt (22) est associée pour l'ouverture et la fermeture de la conduite (21).

13. Système (100) selon l'une des revendications 9 à 12, comprenant un système hydraulique (40), raccordé via une conduite de dérivation (31') aux moyens d'aspiration (30), comprenant une pluralité de tuyaux (41, 41', 41") de diamètres différents, chaque tuyau étant doté d'une soupape (42, 42', 42") du type marche/arrêt.
